# EUROPEAN PATENT APPLICATION

(11) **EP 3 875 648 A1**
(43) Date of publication of application: **08.09.2021**
(21) Application number: 21161121.5
(22) Date of filing: 05.03.2021
(51) Int. Cl.: D02G 3/32, D02G 3/40, D03D 15/283, D03D 15/47, D03D 15/40, D03D 15/547, D03D 15/56

(54) **ELASTIC THREAD WITH LIMITED ELASTICITY AND TEXTILE WITH SUCH ELASTIC THREAD**

(30) Priority: 06.03.2020 TW 109107531
(71) Applicant: Chance Line Industrial Co., Ltd., Changhua County (TW)
(72) Inventor: Yao, Ming-Hsien, Changhua County (TW)
(74) Representative: Lang, Christian

(57) **Abstract**

The invention relates to an elastic thread with limited elasticity, comprising: an elastic thread and a shaping layer combined with the elastic thread. The elastic thread itself has stretchable elasticity; the shaping layer is a high polymer material capable of dissolving in water. When the elastic thread is kept in a combined state with the shaping layer, an elasticity of the elastic thread is greatly reduced, and the elastic thread can be made into a textile, or used as an upper thread for sewing threads and embroidery threads, or as an upper thread for jacquard weave. When the shaping layer is dissolved, the elastic thread restores its original elasticity. The textile made with the elastic thread is soft and has stretchable elasticity.

## Description

### BACKGROUND OF THE INVENTION

### Field of Invention

The invention relates to an elastic thread, and more particularly to an elastic thread with an original elasticity being limited, so that the elastic thread can be used as an upper thread for main yarns or sewing threads of textiles, or as an embroidery thread for embroidery, or as an upper thread for jacquard weave of textiles.

### Related Art

All the yarns used in the textile industry, such as yarns (fibers) used to knit into textiles (such as fabrics), or main sewing threads of textiles or upper threads for jacquard weave of textiles, or embroidery threads of machine embroidery, have always been yarns with extremely low elasticity. The reason is that the yarns with extremely low elasticity can only be stretched within a small degree, so that textile machinery or sewing machines can weave the yarns with extremely low elasticity into textiles, or the yarns with extremely low elasticity can be used as upper threads for main sewing threads or embroidery threads or jacquard weave, so that sewing machines or embroidery machines can sew or embroider the yarns with extremely low elasticity.

Because of its elasticity, the elastic yarn (elastic fiber) cannot be used as an upper thread for circular jacquard weave and knitted jacquard weave, nor can it be used as a main sewing thread.

The existing elastic fiber is spandex, commonly known as lycra. When spandex (or lycra) is used in clothing or fabric, it only occupies a small part of a fabric and cannot be used as the main fiber of a fabric, and will only be used in the inner layer of a fabric, or in the middle layer of a three-layer woven fabric, and spandex cannot be used as jacquard weave for textiles. The reason why elastic fiber cannot be used as the main fiber (yarn and fiber exposed on the surface of a fabric) of a fabric, or as the upper thread for main sewing threads or jacquard weave, lies in its elasticity. Because of the elasticity, the elastic fiber cannot be woven (the tension is not fixed), as it will cause the fabric to be wrinkled (shrunk), uneven, and because the elastic fiber stretches elastically, it may cause a dropped stitch during knitting, that is, the crochet hook of the knitting machine fails to hook the elastic fiber. The elasticity of the elastic fiber also makes it incapable of being used as the main yarn (main fiber) of textiles, and the elastic fiber cannot be hooked and pulled, nor can the tension be controlled.

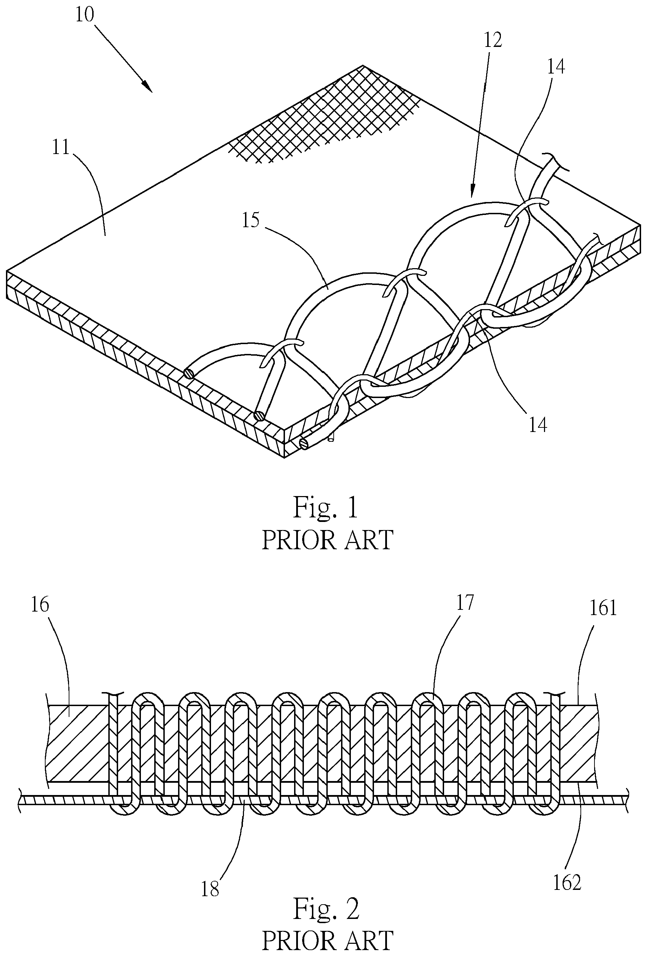

Please refer to FIG. 1 for a back cross-sectional view of a textile 10, the textile 10 is sewn with a sewing thread 12 using a sewing machine, and the sewing thread 12 comprises two main sewing threads 14 and one flatlock stitch thread 15. The two main sewing threads 14 pass through a front and a back of the textile 10 back and forth; and the flatlock stitch thread 15 is located on a back 11 of the textile 10 and hooks with the two main sewing threads 14, and the flatlock stitch thread 15 does not pass through the textile 10. Elastic fiber can only be used as the flatlock stitch thread 15 at most, and cannot be used as the main sewing thread 14, if being used as the main sewing thread 14, the textile 10 will be wrinkled, shrunk, and uneven.

Please refer to FIG. 2 for a cross-sectional view of a textile 16 with an embroidery thread embroidered with an embroidery machine, and various patterns are embroidered on a front 161 of the textile 16. The embroidery thread of machine embroidery comprises: an upper thread 17 and a bottom thread 18. The upper thread 17 passes through the front 161 and a back 162 of the textile 16; and the bottom thread 18 is located on the back 162 of the textile 16 (such as fabric) and passes through and intersects with the upper thread 17. Elastic fiber can only be used as the bottom thread 18 at most, and cannot be used as the upper thread 17 for machine embroidery, if an elastic fiber is used as the upper thread 17, the textile 16 will be shrunk and uneven.

Jacquard is a pique pattern interweaved with warps and wefts using a jacquard loom. Jacquard also has an upper thread and a bottom thread. The jacquard loom weaves the jacquard upper thread on a textile, so that the front of the textile has a jacquard pattern; the bottom thread of the jacquard is located on the back of the textile (such as fabric). Similarly, elastic fiber can only be used as the bottom thread of a jacquard at most, and cannot be used as the upper thread of a jacquard, because its elasticity will cause the jacquard and the textile to shrink.

### SUMMARY OF THE INVENTION

The inventor has been researching and improving yarns and has achieved breakthrough in the manufacturing technology to produce an elastic yarn (or elastic filament) for the textile industry. Due to the stretchability of the conventional elastic yarn, the inventor has tested that when the elastic yarn is woven into a textile (such as fabric) using textile technology, the textile will be shrunk and uneven, and due to the elasticity of the elastic yarn (elastic fiber), it is not easy to weave by weaving machine. Conventional elastic yarn cannot be used as a main sewing thread for sewing by using a sewing machine, or as an upper thread for machine embroidery, or as an upper thread for jacquard weave. In order to solve the defects that the existing elastic yarn cannot be used for knitting, or sewing by using a sewing machine, or machine embroidery, or jacquard weave, the inventor has developed the invention.

An object of the invention is to provide an elastic thread with limited elasticity, so that the elasticity of the elastic thread is greatly reduced or limited, so as to facilitate weaving, sewing or embroidering by machine, and after weaving or sewing or embroidering by machine is completed, the original elasticity of the elastic thread will be restored.

Another object of the invention is to provide an elastic thread with limited elasticity, and with luminescent and/or light-reflective functions to provide safety.

Yet another object of the invention is to provide a textile made with the above-mentioned elastic thread, and after the elastic thread restores its elasticity, the textile will have elasticity.

The elastic thread with limited elasticity provided by the invention comprises:
an elastic thread with stretchable elasticity;
a shaping layer combined with the elastic thread, the shaping layer is a high polymer material capable of dissolving in water; and
when the shaping layer and the elastic thread are kept in a combined state, a thread body is formed, the thread body has low elasticity and low stretch rate; the elasticity of the elastic thread is limited by the shaping layer, and its elasticity is greatly reduced; when the shaping layer is dissolved, the elastic thread is not restrained and can be elastically stretched.

Thereby, the thread body containing the elastic thread has a certain tension and a low stretch rate, the thread body (i.e., the elastic thread with limited elasticity) is suitable for into a textile by textile technology, and can also be used as a sewing thread, or an embroidery thread, or a jacquard of the textile. After the textile is made into a fabric or a clothing, the shaping layer of the thread body is dissolved to restore the elasticity of the elastic thread, and the fabric or the clothing is made with the elastic thread and has stretchable elasticity.

In the textile woven with the thread body of the invention, after the shaping layer of the thread body is dissolved, the textile is woven with the elastic thread, which is soft, close-fitting and has stretchable elasticity.

### BRIEF DESCRIPTION OF THE DRAWINGS

The objects, features, and achieved efficacies of the invention can be understood from the description and drawings of the following preferred embodiments, in which:
FIG. 1 is a back cross-sectional schematic view of a conventional textile showing that the textile has been sewn by machine;
FIG. 2 is a cross-sectional schematic view of a conventional textile showing that the textile has been embroidered;
FIG. 3A is a perspective schematic view of an elastic thread of a first preferred embodiment of the invention;
FIG. 3B is a cross-sectional view of the elastic thread of a second preferred embodiment of the invention;
FIG. 4 is a perspective view of a thread body of a first preferred embodiment of the invention containing the elastic thread of FIG. 3;
FIG. 5 is a cross-sectional view taken along section line 5-5 of FIG. 4;
FIG. 6 is a perspective view of the thread body of a second preferred embodiment of the invention;
FIG. 7 is a perspective view of the thread body of a third preferred embodiment of the invention;
FIG. 8 is a perspective view of the thread body of a fourth preferred embodiment of the invention;
FIG. 9 is a perspective view of the thread body of a fifth preferred embodiment of the invention;
FIG. 10 is an enlarged perspective schematic view showing that the thread body of the invention is woven into a textile;
FIG. 11 is a perspective schematic diagram of the textile after dissolving a shaping layer in the textile of FIG. 10, at this time, the textile is composed of the elastic thread of FIG. 3;
FIG. 12 is a back partial enlarged cross-sectional view of a two-layer textile showing the thread body of the invention being used as a sewing thread;
FIG. 13 shows after the shaping layer of the thread body of FIG. 12 is dissolved, the sewing thread is formed by the elastic thread of the invention;
FIG. 14 is a partial enlarged cross-sectional view of a textile showing the thread body of the invention being used as an embroidery thread;
FIG. 15 shows after the shaping layer of the thread body of FIG. 14 is dissolved, the embroidery thread is formed by the elastic thread of the invention; and
FIG. 16 is a perspective view of a textile with jacquards.

### DETAILED DESCRIPTION OF THE INVENTION

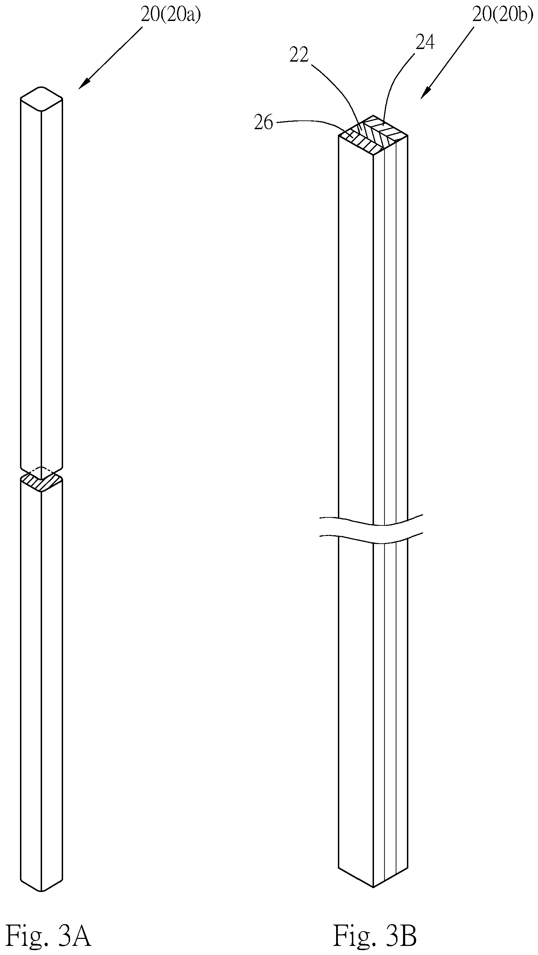

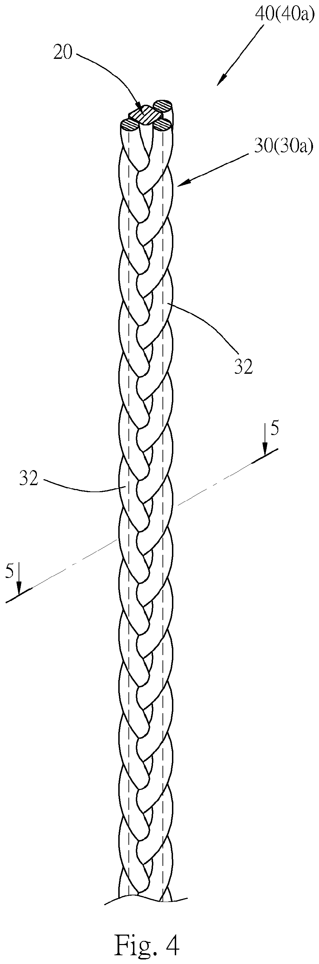

Please refer to FIG. 3 (including FIGS. 3A and 3B) for an elastic thread (or elastic filament or elastic fiber) 20 disclosed by the invention, the elastic thread 20 has proper elasticity and is capable of being elastically stretched. Please refer to FIG. 4, in the invention, the elastic thread 20 is combined with a shaping layer 30 to form a thread body 40. In a state where the elastic thread 20 and the shaping layer 30 are combined with each other, the elastic thread 20 is restrained by the shaping layer 30, so that an elasticity of the elastic thread 20 is greatly reduced or the elastic thread 20 becomes nearly inelastic, that is, the thread body 40 is nearly inelastic or has low elasticity. After the shaping layer 30 is removed, the elasticity of the elastic thread 20 itself can be restored.

In this specification, the reference numeral 20 is used collectively for the elastic thread, and reference numerals 20a and 20b are used when referring to the elastic threads of the specific embodiments in FIGS. 3A and 3B respectively.

Please refer to FIG. 3A, the elastic thread 20a is made of plastic or rubber high molecular material/high polymer material with excellent stretchable elasticity, such as polyurethane (PU), polyvinyl chloride (PVC), thermoplastic polyurethane (TPU) elastomeric rubber, thermoplastic elastomer (TPE), thermoplastic rubber (TPR) or silicone rubber, and the elastic thread 20a is with stretchable elasticity and soft, for example, with 2 times or 3 times of stretchable elasticity, but is not limited thereto. A width of the elastic thread 20 made by the inventor is between 0.05 mm and 0.5 mm, and has a considerable length, for example, 3000 to 4000 meters. The elastic thread (elastic filament) 20 is described in more detail in another pending patent application invented by the inventor.

Please refer to FIG. 3B for a cross-sectional view of the elastic thread 20b shown in a second preferred embodiment of the invention. The elastic thread 20b of this embodiment is generally the same as the elastic thread 20a of FIG. 3A and has a considerable length. Different from the elastic thread 20a of FIG. 3A, which is made solely with a single composition, the elastic thread 20b of this embodiment has luminescent and/or light-reflective functions, that is, the elastic thread 20b is added with a luminescent material (such as luminescent particles) or a light-reflective material (such as glass microbeads with light-reflective effect), so that in addition to being capable of elastically stretching, the elastic thread 20b also has light-reflective and/or luminescent functions.

The elastic thread 20b in FIG. 3B has a main layer 22 and at least one functional layer disposed on at least one surface of the main layer 22 in a cross-sectional structure. The main layer 22 of this embodiment is made of the aforementioned polyurethane (PU), polyvinyl chloride (PVC), thermoplastic polyurethane (TPU) elastomeric rubber, thermoplastic elastomer (TPE), thermoplastic rubber (TPR) or silicone rubber of high molecular material/high polymer material, and is rectangular. Two functional layers, a luminescent layer 24 and a light-reflective layer 26, are respectively disposed on two surfaces of the main layer 22. The luminescent layer 24 forms a luminescent surface on one of the surfaces of the elastic thread 20b, and the light-reflective layer 26 forms a light-reflective surface on the other surface of the elastic thread 20b.

The elastic thread indicated by the reference numeral 20 hereinafter comprises the elastic thread 20a of FIG. 3A and the elastic thread 20b of FIG. 3B.

The shaping layer 30 is made of a high molecular material/high polymer material with solubility, the shaping layer 30 is capable of dissolving in specific media (such as liquid) and under specific conditions (such as temperature), its dissolution temperature is lower than a melting point of the elastic thread 20, and the melting point of the elastic thread 20 is preferably higher than 100°C. In the invention, the shaping layer 30 is made of polyvinyl alcohol (PVA) of high polymer material, which is non-toxic and non-irritating, and can be dissolved in water at 100°C or below 100°C, such as water at a temperature between 1-100°C. The shaping layer 30 has a certain tension and is not easy to stretch. Depending on a degree of alkalinity, a temperature at which the shaping layer 30 (PVA) dissolves in water is also different.

In this specification, the reference numeral 30 is used collectively for the shaping layer, and the shaping layers of specific preferred embodiments are represented by reference numerals 30a to 30f; in this specification, a reference numeral 32 is used collectively for a shaping yarn, and the specific shaping yarns are represented by reference numerals 32a to 32d. In this specification, the reference numeral 40 is used collectively for the thread body, and the thread bodies described in different preferred embodiments are represented by reference numerals 40a to 40f.

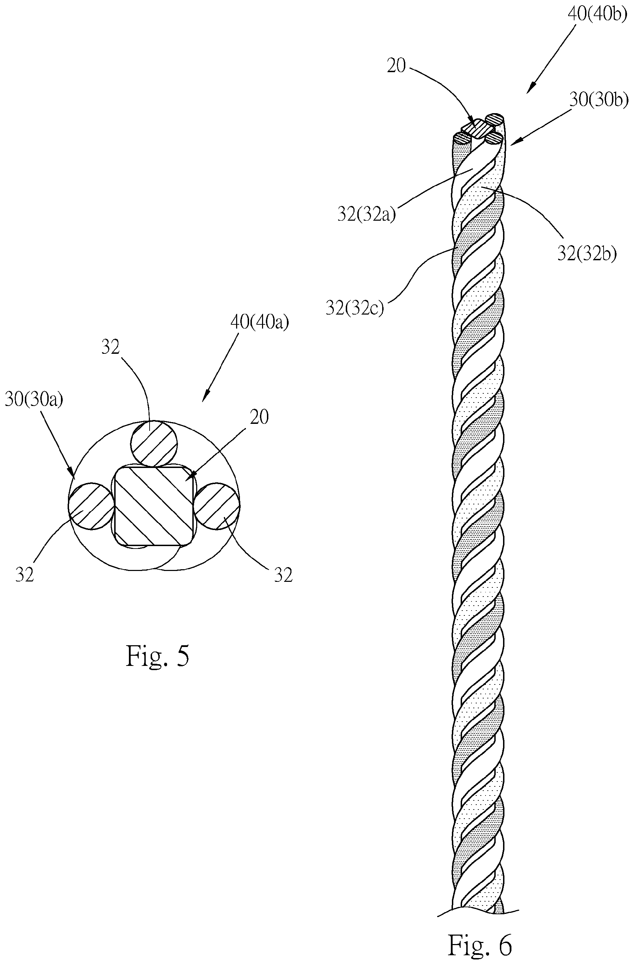

Please refer to FIGS. 4 and 5 for the shaping layer 30a and the thread body 40a of a first preferred embodiment of the invention. The shaping layer 30a is composed of one shaping yarn 32 or more than one of the shaping yarn 32, which is made of PVA material, and is combined with the elastic thread 20. In this preferred embodiment, the elastic thread 20 is enclosed by the three shaping yarns 32 in a cross-knitting manner to form the thread body 40a of the first preferred embodiment of the invention. The elastic thread 20 is enclosed by the shaping yarns 32 so that its elasticity is limited by the yarns 32. In the thread body 40a, the elastic thread 20 has a straight strip shape and is enclosed by the shaping yarns 32. In the above-mentioned structure, the shaping layer 30 (i.e., the three shaping yarns 32) makes the thread body 40a have low elasticity or being nearly inelastic. Therefore, the thread body 40a has a certain tension to facilitate hooking and pulling during knitting.

When the thread body 40 of FIG. 4 is placed in water at 100° C or below 100° C, the shaping layer 30a will dissolve, and after dissolution, the elastic thread 20 with elasticity in FIG. 3 (FIG. 3A or 3B) will remain.

Please refer to FIG. 6 for the thread body 40b of a second preferred embodiment of the invention, the thread body 40b comprises the aforementioned elastic thread 20 and the shaping layer 30b. The shaping layer 30b of this embodiment is formed with at least one of the shaping yarns 32 and encloses the elastic thread 20. In the thread body 40b, the elastic thread 20 has a straight strip shape and is enclosed by the shaping yarns 32. In this embodiment, the three shaping yarns 32a, 32b, 32c are wound around the elastic thread 20 in a spiral manner. The three yarns 32 are made of a same material, and in order to facilitate discrimination, the three yarns 32 are shown in different shades in FIG. 6.

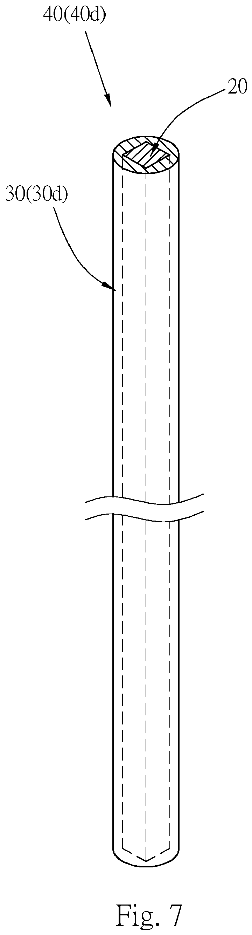

Please refer to FIG. 7 for the thread body 40d of a third preferred embodiment of the invention, the thread body 40d comprises the aforementioned elastic thread 20 and the shaping layer 30d. The shaping layer 30d is a hollow strip body, and the elastic thread 20 is completely enclosed in the shaping layer 30d. In the thread body 40d, the elastic thread 20 has a straight strip shape and is enclosed by the shaping layer 30d. In this embodiment, polyvinyl alcohol is metered and coated on the elastic thread 20 to form the shaping layer 30d.

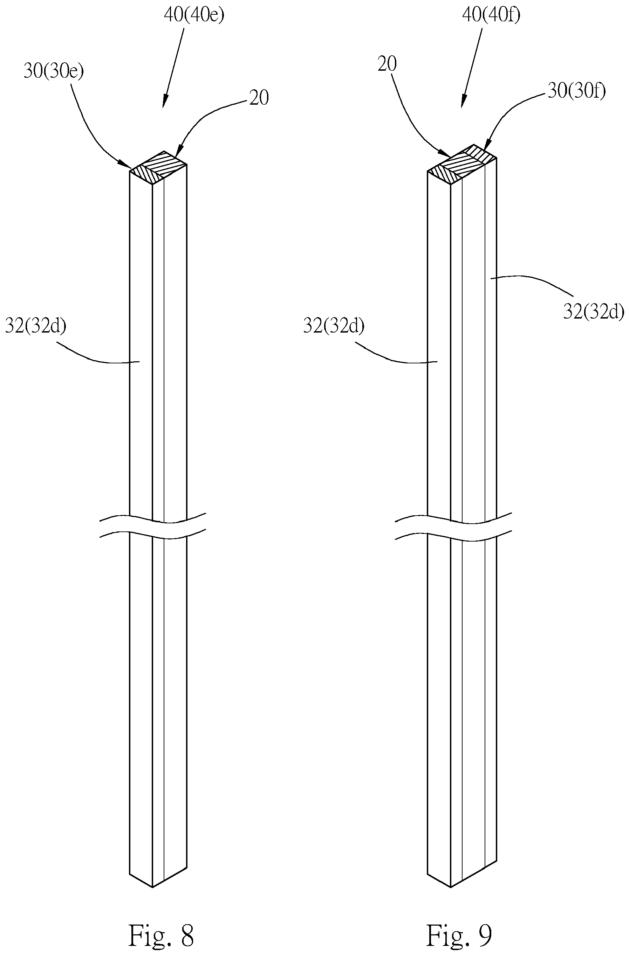

FIG. 8 shows the thread body 40e of a fourth preferred embodiment of the invention, the thread body 40e comprises the aforementioned elastic thread 20 and the shaping layer 30e. The shaping layer 30e of this embodiment is the shaping yarn 32d, which is attached to one side surface of the elastic thread 20. In the thread body 40e, the elastic thread 20 has a straight strip shape and is shaped by the shaping layer 30e (the shaping yarn 32d).

FIG. 9 shows the thread body 40f of a fifth preferred embodiment of the invention, the thread body 40f comprises the aforementioned elastic thread 20 and the shaping layer 30f. The shaping layer 30f of this embodiment is the two shaping yarns 32d, which are attached to two side surfaces of the elastic thread 20. Preferably, the two shaping yarns 32d are located on two surfaces on different sides/opposite sides of the elastic thread 20. In the thread body 40f, the elastic thread 20 has a straight strip shape and is shaped by the shaping layer 30f (the shaping yarns 32d).

Similarly, in the preferred embodiments of FIGS. 6 to 9, the shaping layer 30 (30b-30f) makes the thread body 40 (40b-40f) have low elasticity or being nearly inelastic. When the thread body 40 in FIGS. 6 to 9 is placed in water at 100°C or below 100°C, the shaping layer 30 will dissolve, and the elastic thread 20 in FIG. 3 (FIG. 3A or FIG. 3B) will remain.

The shaping layer 30 of the invention has a certain tension and cannot be stretched, so that the thread body 40 of the invention also maintains a certain tension and has a low stretch rate. The elastic thread 20 is restrained by the shaping layer 30 and cannot exhibit its elasticity.

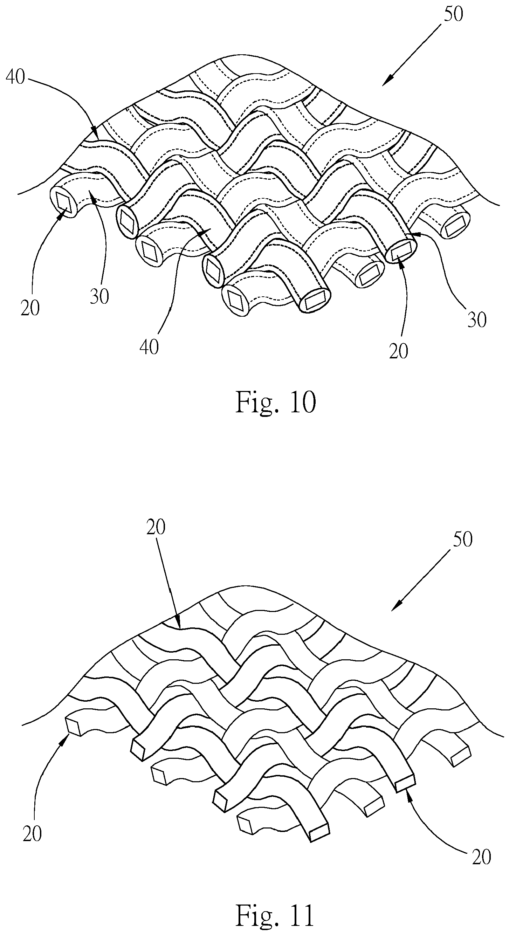

Since the thread body 40 of the invention has a certain tension, does not stretch elastically, and has a low stretch rate, the thread body 40 can be used as a main fiber of textiles and is suitable for weaving with textile machines by using textile techniques (such as knitting, plain weaving, circular weaving, non-woven textile techniques) to form a textile 50 shown in FIG. 10 (FIG. 10 shows the thread body 40 is woven into a textile with warps and wefts), for example, fabric. The thread body 40 of the invention has low elasticity and low stretch rate, and can be hooked and pulled by a crochet hook of a textile machine. The thread body 40 shown in FIG. 10 can be any one of the thread bodies shown in the first to fifth preferred embodiments, and the shaping layer 30 in the figure is only for illustration. In addition to be capable of being used as a main fiber of a fabric, the thread body 40 of the invention can also be used as a fiber for an inner layer or a bottom layer of the fabric, that is, the thread body 40 of the invention can be used as a fiber in any part of the fabric without limitation.

For example, after the textile (fabric) 50 is made into a clothing, the clothing is immersed in water at an appropriate temperature, and the shaping layer 30 of the thread body 40 will be dissolved in water. After the shaping layer 30 is dissolved, the clothing (textile 50), as shown in FIG. 11, becomes clothing (textile 50) woven with the elastic thread 20. In this way, the fibers of the clothing are the aforementioned elastic threads 20, which have stretchable elasticity and are soft to provide comfortable wearing. The textile 50 made with the thread body 40 of the invention can be made into apparel, shoes, or bags (handbags, backpacks), and the apparel that can be made includes general clothes, swimwear, sportswear, leggings, T-shirts, ribbons, etc. Taking apparel as an example, after a consumer purchases the apparel made of the thread body 40, the apparel is placed in water to dissolve the shaping layer 30, and the fibers (elastic threads 20) of the apparel after the dissolution process restore elasticity, making the apparel soft, close-fitting, suitable for wearing and with excellent tactile impression. The elastic thread 20 of the invention can become fibers of various parts of a fabric, such as an upper surface, inner layers, or a bottom surface. Thus, when the elastic thread 20 is used as the fibers of the fabric, the fabric will not shrink or be uneven. In addition, the shaping layer 30 can also be dissolved during dyeing and shaping stages in a fabric making process, and it is not necessary to dissolve the shaping layer 30 only after the fabric is completely made.

When clothing (textile) is being woven, not all of but only a part of the fibers or parts of the clothing, for example, parts that wearers stretch or move most frequently during movements or activities, such as sleeves, or bottoms and legs of a pair of pants, need to be woven with the thread body 40 of the invention. That is, the clothing (textile) needs not to be made solely with the thread body 40 of the invention.

The thread body 40 can also be used as a main sewing thread sewn by machine, as an upper thread of machine embroidery/computerized machine embroidery, or as an upper thread of jacquard weave.

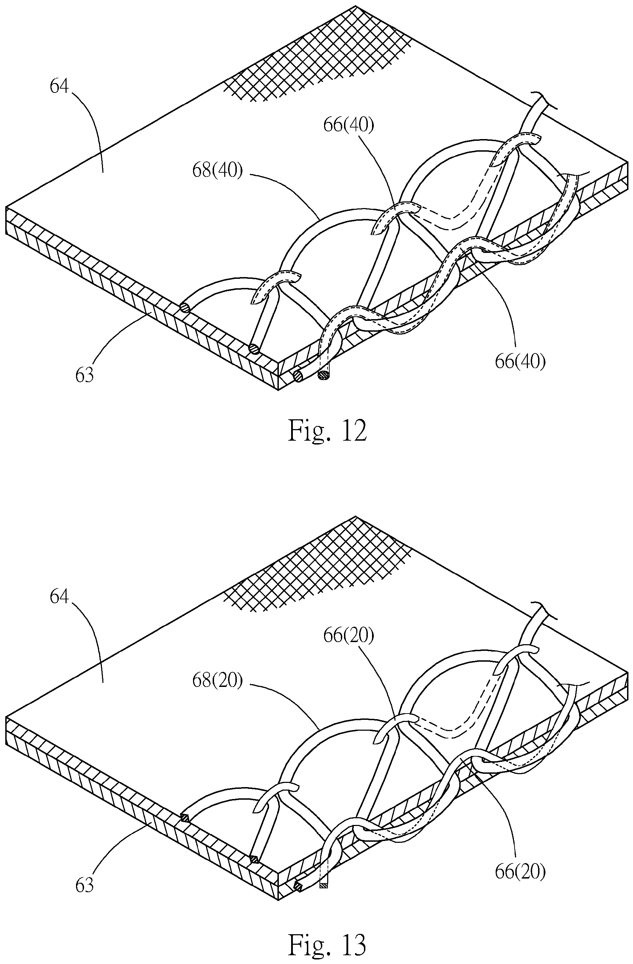

Please refer to FIG. 12 for a back partial enlarged cross-sectional schematic view of two-layer textiles 63, 64 showing that the thread body 40 (any one of 40a to 40f) of the invention is used as a sewing thread to sew the two-layer textiles 63, 64 by machine. The sewing thread includes two main sewing threads 66 passing through the textiles 63, 64, and a flatlock stitch thread 68, and the flatlock stitch thread 68 is hooked with the two main sewing threads 66 on a back of the textiles 63, 64. Since the thread body 40 of the invention has low elasticity and low stretch rate, the thread body 40 can be used as the main sewing threads 66 to be sewn on the textiles 63, 64 by a sewing machine. The thread body 40 can also be used as the flatlock stitch thread 68.

When the textiles 63, 64 are placed in water, the shaping layer 30 on the thread body 40 can be dissolved and the elasticity of the elastic thread 20 can be restored. In this way, as shown in FIG. 13, both the main sewing thread 66 and the flatlock stitch thread 68 are the elastic thread 20 with elasticity. If the textiles 63, 64 have elasticity, the main sewing threads 66 and the flatlock stitch thread 68 are capable of stretching elastically with the textiles 63, 64. In this way, when the elastic thread 20 is used as the main sewing threads 66, the textiles 63, 64 will not shrink or be uneven.

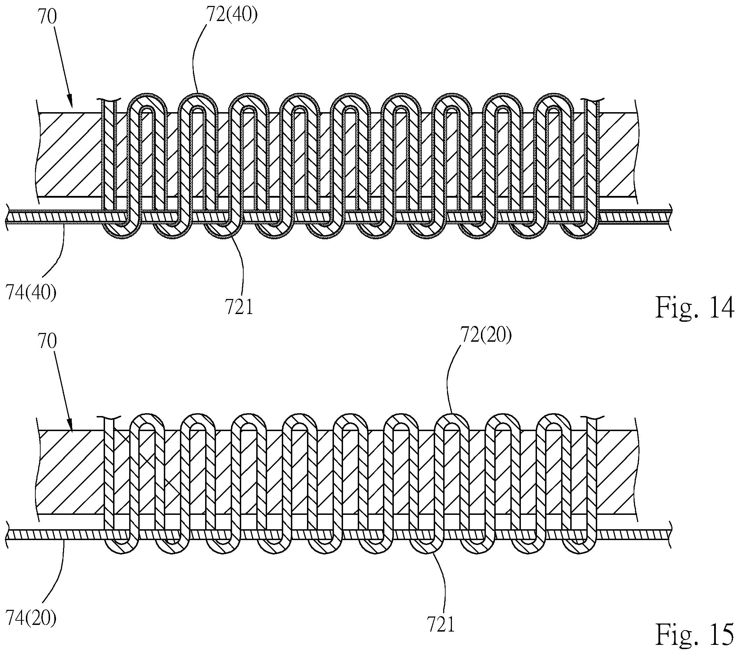

Please refer to FIG. 14 for a cross-sectional view of a textile 70, showing the thread body 40 (any one of 40a to 40f) of the invention is used as an embroidery thread to be embroidered on the textile (such as fabric) 70 with an embroidery machine to embroider patterns. The embroidery thread comprises an upper thread 72 and a bottom thread 74, the upper thread 72 passes through a front and a back of the textile 70 back and forth; and the bottom thread 74 is located on the back of the textile 70, and passes through and hooks with the upper thread 72 at turning points 721. The thread body 40 has the characteristics of low elasticity and low stretch rate, which can be used for hooking and pulling, so that the thread body 40 can be used as the upper thread 72 of the embroidery thread, and the thread body 40 can be embroidered on the textile 70 using an embroidery machine/computerized embroidery machine. The thread body 40 can also be used as the bottom thread 74.

When the textile 70 is placed in water, the shaping layer 30 on the thread body 40 can be dissolved and the elasticity of the elastic thread 20 can be restored. In this way, as shown in FIG. 15, both the upper thread 72 and the bottom thread 74 of the embroidery thread are the elastic thread 20 with elasticity. If the textiles 63, 64 have elasticity, the upper thread 72 is capable of stretching elastically with the textiles 63, 64. In this way, when the elastic thread 20 is used as the upper thread 72 of the embroidery thread, the textile 70 will not shrink or be uneven.

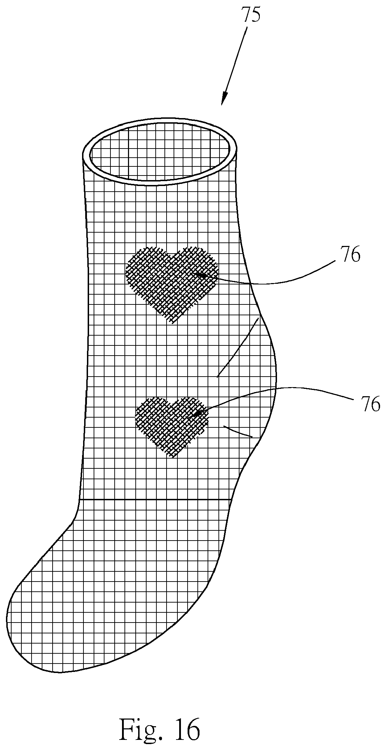

FIG. 16 shows a textile 75, and shows the thread body 40 of the invention is used as an upper thread of jacquard weave. The thread body 40 is woven on the textile 75 with a jacquard loom to form a plurality of jacquards 76. Since the thread body 40 of the invention has a certain tension, low elasticity and low stretch rate, the thread body 40 can be hooked and pulled and used as the upper thread of the jacquards 76. The thread body 40 of the invention can also be used as a bottom thread of the jacquards 76. After the jacquards 76 are knitted, the textile 75 is placed in water to dissolve the shaping layer 30 on the thread body 40 and restore the elasticity of the elastic thread 20. In this way, both the upper thread and the bottom thread of the jacquards 76 are the elastic thread 20 with elasticity, and the jacquards 76 are capable of stretching elastically with the textile 75. In this way, when the elastic thread 20 is used as the upper thread of the jacquards 76, the textile 75 and the jacquards 76 will not shrink or be uneven.

The invention provides a structural design that limits the elasticity of the elastic thread 20, that is, the thread body 40 of the invention has a fixed tension and does not stretch elastically before the shaping layer 30 is dissolved. The thread body 40 can be used as a fiber for a textile machinery to hook and pull, and to make the thread body 40 into various textiles. The thread body 40 can also be used as a fiber of various parts of inner and outer layers of a textile. After the textile is made into a finished product, the finished product is placed in water to dissolve the shaping layer 30 of the thread body 40 to restore the elasticity of the elastic thread 20, and to make the textile into a textile woven with the elastic thread 20 solely. The thread body 40 of the invention can also be used as an upper thread of main sewing threads and embroidery threads, or as an upper thread of jacquard weave. After sewing or embroidery by machine is completed, the shaping layer 30 is dissolved to leave the elastic thread 20 being used as an upper thread of main sewing threads and embroidery threads, or as an upper thread of jacquard weave.

The elastic thread 20b in FIG. 3B is used to make clothes, fabrics, main sewing threads or upper threads with luminescent and/or light-reflective functions. When the elastic thread 20b is used as a main fiber, or a main sewing thread, or an upper thread of a fabric, the elastic thread 20b is capable of making the clothes worn by people have luminescent and/or light-reflective effects, thereby improving the safety of night activities.

By limiting the elasticity of the elastic thread, the invention solves the defects that the conventional elastic thread cannot be made into a main fiber of fabrics, or cannot be used as a main sewing thread or an upper thread, thereby the invention pioneering a new field in the textile industry.

It is to be understood that the above description is only preferred embodiments of the present invention and is not used to limit the present invention, and changes in accordance with the concepts of the present invention may be made without departing from the spirit of the present invention, for example, the equivalent effects produced by various transformations, variations, modifications and applications made to the configurations or arrangements shall still fall within the scope covered by the appended claims of the present invention.

## Claims

1. An elastic thread with limited elasticity, comprising:
an elastic thread made of a high polymer material with stretchable elasticity;
a shaping layer combined with the elastic thread, the shaping layer being a high polymer material with solubility and capable of dissolving in water; and
when the shaping layer and the elastic thread being kept in a combined state, a thread body being formed, the thread body having low elasticity, the elasticity of the elastic thread being limited by the shaping layer; in the thread body, the elastic thread having a straight strip shape; when the shaping layer being dissolved, the elastic thread being restored with elasticity.

2. The elastic thread as claimed in claim 1, wherein a material of the shaping layer is polyvinyl alcohol.

3. The elastic thread as claimed in claim 1 or 2, wherein the shaping layer is formed with at least one shaping yarn enclosing an outer peripheral surface of the elastic thread.

4. The elastic thread as claimed in claim 3, the shaping layer being formed with at least two shaping yarns, the yarn material being knitted to enclose the elastic thread to form the thread body.

5. The elastic thread as claimed in claim 3, the shaping yarn being wound around the elastic thread.

6. The elastic thread as claimed in claim 1 or 2, wherein the shaping layer is a strip-shaped body; the elastic thread is completely enclosed in the shaping layer.

7. The elastic thread as claimed in claim 1 or 2, wherein the shaping layer is formed with at least one shaping yarn and combined to one side surface of the elastic thread.

8. The elastic thread as claimed in claim 6, wherein the shaping layer has at least two shaping yarns respectively combined to surfaces on at least two different sides of the elastic thread.

9. The elastic thread as claimed in claim 1 or 2, wherein a temperature at which the shaping layer is dissolved in water is at or below 100°C.

10. The elastic thread as claimed in claim 1, wherein surfaces of the elastic thread have luminescent property and/or light-reflective property.

11. The elastic thread as claimed in claim 10, wherein a cross-sectional structure of the elastic thread has a main layer and at least one functional layer, the functional layer is provided on at least one surface of the main layer and has luminescent property or light-reflective property.

12. A textile which is solely or partially woven with the elastic thread with limited elasticity as claimed in any one of claims 1 to 11.
